# EUROPEAN PATENT SPECIFICATION

(11) **EP 0 938 256 B1**
(45) Date of publication and mention of the grant of the patent: **09.07.2003**
(21) Application number: 98937777.5
(22) Date of filing: 03.08.1998
(51) Int. Cl.: A01B 33/10

(54) **BLADE WITH PLATE FOR ROTARY HARROWS**
PLATTE FÜR KREISELEGGENZINKEN
LAME AVEC PLATEAU POUR HERSES ROULANTES

(30) Priority: 18.08.1997 IT PD970184
(43) Date of publication of application: 01.09.1999
(73) Proprietor: Burato, Giovanni, 31021 Mogliano Veneto (IT)
(72) Inventor: Burato, Giovanni, 31021 Mogliano Veneto (IT)
(74) Representative: Gustorf, Gerhard, Dipl.-Ing.
(86) International application number: IT9800226
(87) International publication number: WO99008502

(56) References cited:
- DE-A- 2 546 978
- US-A- 2 528 576
- US-A- 3 765 491
- US-A- 4 175 624

## Description

The invention concerns the sector of agricultural machinery and in particular the machines that can be applied to agricultural tractors for the preparation of the soil before the seeding phase. Specifically, it concerns rotary harrows and in particular their blades (e.g. see US-A-4 175 624).

The rotary harrows are machines that make it possible to break the soil sufficiently even in the most difficult conditions. On the other hand, they are also characterized by considerable energy consumption, rather slow operation, and scarce efficiency in weed destruction.

Said harrows comprise a series of substantially vertical blades installed in pairs on rotary discs that are set rotating - through a power takeoff - by the engine of the advancing tractor, so that the blades move forward and rotate at the same time. At present said blades are not capable of tilling the soil completely, but they leave some areas intact, in particular, in some areas the soil is not lifted, and as a consequence of this the weeds are not destructed and can thus grow and spread further.

The same inventor has already filed a patent application regarding a rotary blade provided with lateral element, application n. PD 96 A 11; this invention has given satisfying experimental results.

The research and experiments carried out have led to a further, important improvement of the a.m. invention, consisting of a plate with suitable shape that is inserted and fixed on the traditional blade, as defined in claim 1.

In particular said plate is preferably triangular and is provided with two sides with cutting edge and with a hole, in semicentral position, substantially having the size of the blade cross section.

By inserting a blade (from the pointed end) in said hole and moving the plate to approximately one third of the blade height, it is possible to obtain a blade for rotary harrows provided with two lateral protrusions that are sharp, too. Suitable studies have shown that said lateral protrusions can have different lengths, with the inner part longer and more pointed.

In this way the part of the soil that could not be prepared with traditional harrows and that resulted from two passages of the rotor can now be prepared without problems, since the blade with plate described above cuts the soil between the two blades even horizontally and also cuts the weed roots.

Therefore, weeding treatments can be eliminated or greatly reduced, with considerable money saving and advantages for the environment, according to the EU directives. The invention also makes it possible to increase the tractor advancement speed or to reduce the rotor rpm, thus reducing also fuel consumption and the wear of the components.

The plate can be applied to any suitable type of blade known at present. In fact, it is sufficient to raise the blade from the ground and to introduce the plate from below, with the cutting edges directed forward.

In particular, the shape and size of the hole become particularly important for the correct fastening of the plate to the blade. In fact, since the hole has the same shape as the blade section, the blade and the plate are thus locked to each other and the plate cannot slip off the blade because its front part is narrow and converging, while the central part of the hole corresponds and perfectly adapts to the widening of the blade body. The two cutting edges of the plate converge toward the front cutting edge of the blade, whose cutting efficiency remains unaltered. Furthermore, to prevent the plate from slipping from below a short weld between blade and plate is sufficient.

Blade for rotary harrows provided with an additional element substantially orthogonal to it, provided with two lateral cutting edges, one for each side of the blade, as claimed in claim 1, and wherein one cutting edge is longer than the other.

Blade as claimed in claim 1, to which a substantially triangular plate is applied, said plate being provided with two cutting sides or edges and a semicentral hole, and wherein the blade is inserted in said hole and said hole has substantially the same shape and size as the blade cross section.

The following is just an example among many of a practical application of the invention in question, illustrated in the attached drawings.

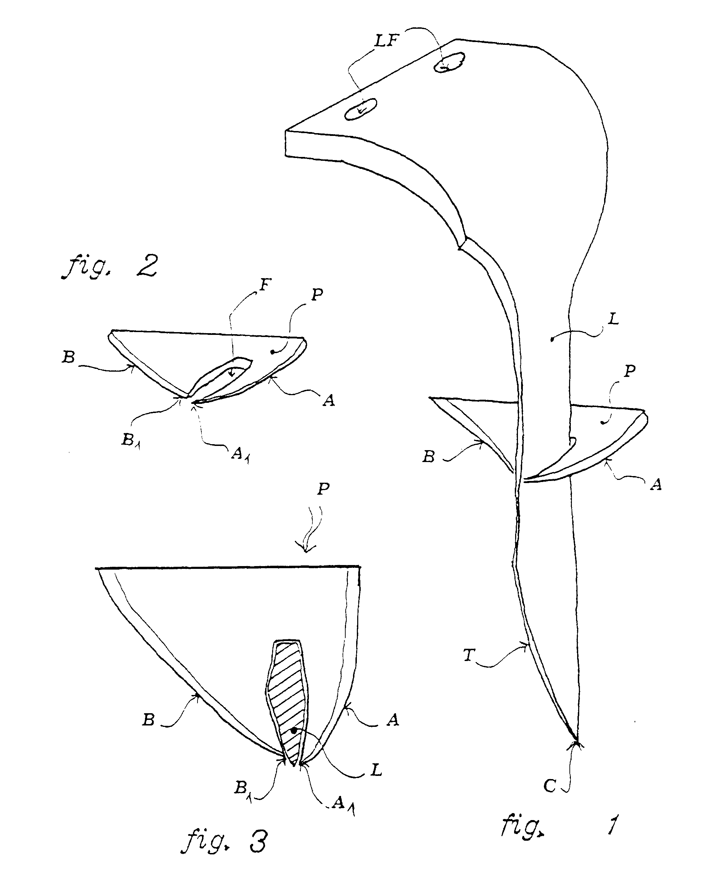

Figure 1 shows a general view of a blade to which a triangular plate is applied, Figure 2 shows the plate before the insertion in the blade, Figure 3 shows a section of the blade in correspondence with the area where the plate rests.

The blade, indicated as a whole by (L), is provided with upper holes (LF) for the fastening to the rotors, with cutting edge (T) and point (C). The plate (P), which in this case is triangular and is provided with sides with cutting edges (A) and (B) and with a hole (F) in which the blade (L) is inserted, is applied to the blade at a suitable height.

Said hole has substantially the same shape as the blade (L) section and the particular shape of the hole itself prevents the plate from slipping off the blade during operation. In fact, the ends (A1) and (B1) of the cutting edges (A) and (B) converge, until they almost touch, toward the cutting edge of the blade (L), thus preventing the plate from both rotating and slipping off. A small weld between the blade (L) and the plate (P) locks said plate in the correct position.

The above are the basic outlines of the invention, on the basis of which the technician will be able to provide for implementation.

## Claims

1. Blade for rotary harrow comprising a vertical portion to which a soil working plate (P) is fitted extending generally perpendicular to said vertical portion and having two lateral cutting edges (A, B), one for each side of the blade, **characterized in that** said plate (P) has an aperture (F) having substantially the same shape and size as the cross section of the vertical portion of the blade (L) that is provided with a cutting edge (T) such that said plate (P) may be friction-locked to the vertical blade portion.

2. Blade according to claim 1, wherein the plate (P) is additionally fixed to the vertical blade portion by welding.

3. Blade according to claim 1 or 2, wherein the plate (P) has a triangular shape with two cutting edges (A, B) converging at the cutting edge (T) of the vertical portion of the blade (L).

4. Blade according to claim 3, wherein the aperture (F) of the plate (P) has an open end confined by the converging ends (A₁, B₁) of said cutting edges (A, B).

5. Blade according to claim 3 or 4, wherein one cutting edge (B) of the plate (P) is longer than the other cutting edge (A).

## Patentansprüche

1. Zinke für eine Kreiselegge mit einem vertikalen Abschnitt, an dem eine Bodenbearbeitungsplatte (P) befestigt ist, die sich im wesentlichen rechtwinklig zu dem vertikalen Abschnitt erstreckt und zwei seitliche Schneidkanten (A, B) hat, von denen jeweils eine auf jeder Seite der Zinke vorgesehen ist, **dadurch gekennzeichnet, daß** die Platte (P) eine Öffnung (F) aufweist, die im wesentlichen dieselbe Form und Größe wie der Querschnitt des vertikalen Abschnitts der eine Schneidkante (T) aufweisenden Zinke (L) hat, derart, daß die Platte (P) reibschlüssig an dem vertikalen Abschnitt fixiert werden kann.

2. Zinke nach Anspruch 1, **dadurch gekennzeichnet, daß** die Platte (P) an dem vertikalen Abschnitt der Zinke zusätzlich durch Schweißen befestigt ist.

3. Zinke nach Anspruch 1 oder 2, **dadurch gekennzeichnet, daß** die Platte (P) eine Dreiecksform mit zwei Schneidkanten (A, B) hat, die zur Schneidkante (T) des vertikalen Abschnitts der Zinke (L) konvergieren.

4. Zinke nach Anspruch 3, **dadurch gekennzeichnet, daß** die Öffnung (F) der Platte (P) ein offenes Ende hat, das durch die konvergierenden Enden (A₁, B₁) der Schneidkanten (A, B) begrenzt wird.

5. Zinke nach Anspruch 3 oder 4, **dadurch gekennzeichnet, daß** eine Schneidkante (B) der Platte (P) länger als die andere Schneidkante (A) ist.

## Revendications

1. Lame pour une herse rotative comprenant une partie verticale à laquelle est fixée une plaque (P) pour travailler le sol qui s'étend en direction sensiblement rectangulaire par rapport à ladite partie verticale et qui présente deux arêtes coupantes latérales (A, B), positionnées de chaque côté de la lame, **caractérisée par le fait que** ladite plaque (P) présente une ouverture (F) ayant sensiblement la même forme et la même taille que la section transversale de la partie verticale de la lame (L) munie d'un tranchant (T), de manière que ladite plaque (P) puisse être fixée par friction à la partie verticale de la lame.

2. Lame selon la revendication 1, **caractérisée par le fait que** ladite plaque (P) est en outre fixée à la partie verticale de la lame par soudage.

3. Lame selon la revendication 1 ou 2, **caractérisée par le fait que** la plaque (P) présente une forme triangulaire avec deux arêtes coupantes (A, B) convergentes au tranchant (T) de la partie verticale de la lame (L).

4. Lame selon la revendication 3, **caractérisée par le fait que** l'ouverture (F) de la plaque (P) présente une extrémité ouverte bordée par les extrémités convergentes (A₁, A₂) des arêtes coupantes (A, B).

5. Lame selon la revendication 3 ou 4, **caractérisée par le fait qu'**une arête coupante (B) de la plaque est plus longue que l'autre arête coupante (A).
